# EUROPEAN PATENT SPECIFICATION

(11) **EP 3 378 588 B1**
(45) Date of publication and mention of the grant of the patent: **25.12.2024**
(21) Application number: 16866068.6
(22) Date of filing: 13.10.2016
(51) Int. Cl.: B23B 51/10, B23C 3/05, B23B 51/08, B23D 77/00

(54) **CUTTING TOOL AND CUTTING DEVICE**
SCHNEIDWERKZEUG UND SCHNEIDVORRICHTUNG
OUTIL DE COUPE ET DISPOSITIF DE COUPE

(30) Priority: 16.11.2015 JP 2015224035
(43) Date of publication of application: 26.09.2018
(73) Proprietor: Sumitomo Electric Hardmetal Corp., Itami-shi, Hyogo 664-0016 (JP)
(72) Inventor: KOJO, Hidekazu, Itami-shi Hyogo 664-0016 (JP)
(74) Representative: Boult Wade Tennant LLP
(86) International application number: PCT/JP2016/080317
(87) International publication number: WO 2017/086066

(56) References cited:
- WO-A1-2015/037697
- JP-A- 2001 071 204
- JP-A- 2003 127 026
- JP-A- 2005 074 581
- JP-A- 2005 074 583
- JP-A- 2011 036 941
- JP-A- 2013 071 214
- US-A- 1 495 910
- US-A- 5 044 841
- US-A- 5 704 741
- US-A1- 2007 020 052
- US-A1- 2015 115 549

## Description

### TECHNICAL FIELD

The present disclosure relates to a cutting tool and a cutting device. The present application claims the priority benefit of Japanese Patent Application No. 2015-224035 filed on November 16, 2015.

### BACKGROUND ART

For example, Japanese Patent Laying-Open No. 2015-54385 (PTD 1) discloses a valve finisher capable of coaxially finish machining a hole in a stem guide of a cylinder head in an engine and machining an inner peripheral surface of a valve seat. The valve finisher includes a plurality of cutting inserts which are disposed on the outer periphery of a main body. US2007/0020052A1 discloses a rotatable valve seat tool assembly.

### CITATION LIST

### PATENT DOCUMENT

PTD 1: Japanese Patent Laying-Open No. 2015-54385

### SUMMARY OF INVENTION

A cutting tool according to the invention includes a main body and a cutter. The main body has an outer peripheral surface with one end and the other end. The cutter is fixed to the main body. The main body is provided with a hole extending in a direction from a region surrounded by the one end toward a region surrounded by the other end. When viewed from this direction, the shape of the opening of the hole is circular, and the hole is provided inner than the outer peripheral surface. The cutter has a member disposed inside the hole. The main body is provided with a recess in communication with the hole. When viewed from a radial direction, the main body has a projection member covering a part of the recess.

### BRIEF DESCRIPTION OF DRAWINGS

Fig. 1 is a schematic perspective view illustrating the structure of a cutting tool according to the present embodiment;
Fig. 2 is a schematic perspective view illustrating the structure of a main body of the cutting tool according to the present embodiment;
Fig. 3 is a schematic front view illustrating the structure of the main body of the cutting tool according to the present embodiment;
Fig. 4 is a schematic side view illustrating the structure of the main body of the cutting tool according to the present embodiment;
Fig. 5 is a schematic cross-sectional view taken along line V-V in Fig. 3;
Fig. 6 is a schematic cross-sectional view taken along line VI-VI in Fig. 4;
Fig. 7 is a schematic side view illustrating the structure of a cutter of the cutting tool according to the present embodiment;
Fig. 8 is a schematic cross-sectional view illustrating a state in which the cutter is inserted in a hole of the main body;
Fig. 9 is a schematic perspective view illustrating the structure of a cutting tool according to a modification of the present embodiment;
Fig. 10 is a schematic side view illustrating the structure of a cutter of the cutting tool according to a first modification of the present embodiment;
Fig. 11 is a schematic front view illustrating the structure of a cutter of the cutting tool according to the first modification of the present embodiment;
Fig. 12 is a schematic side view illustrating the structure of a cutter of the cutting tool according to a second modification of the present embodiment;
Fig. 13 is a schematic front view illustrating the structure of a cutter of the cutting tool according to the second modification of the present embodiment;
Fig. 14 is a schematic side view illustrating the structure of a cutter of the cutting tool according to a third modified example of the present embodiment;
Fig. 15 is a schematic front view illustrating the structure of a cutter of the cutting tool according to the third modification of the present embodiment;
Fig. 16 is an exploded schematic perspective view illustrating the structure of the cutting tool according to the present embodiment; and
Fig. 17 is a schematic partial cross-sectional view illustrating the structure of the cutting device according to the present embodiment.

### DETAILED DESCRIPTION

### [Problem to be Solved by the Present Disclosure]

According to the valve finisher, a part of the outer periphery of the main body is cut off so as to form a pocket in the outer periphery, and each cutting insert is disposed in the pocket. Since the outer peripheral portion of the main body is cut off so as to form a pocket therein, the strength and the rigidity of the main body are reduced. Therefore, it is difficult to hold a large number of cutting inserts (cutter) in the main body. As a result, it is necessary to cut a workpiece with a small number of cutters, which consequently deteriorates the durability of cutting edges.

An object of one aspect of the present disclosure is to provide a cutting tool and a cutting device capable of improving the durability of cutters.

### [Advantageous Effect of the Present Disclosure]

According to one aspect of the present disclosure, there is provided a cutting tool and a cutting device capable of improving the durability of cutters.

### [Summary of Embodiments]

First, aspects of the present disclosure will be described briefly hereinafter.

A cutting tool 100 according to one aspect of the present disclosure includes a main body 10 and a cutter 20. The main body 10 has an outer peripheral surface 30 with one end 16 and the other end 17. The cutter 20 is fixed to the main body 10. The main body 10 is provided with a hole 6 extending in a direction from a region 15 surrounded by one end 16 to a region 18 surrounded by the other end 17. When viewed from the above direction, the shape of the opening 19 of the hole 6 is circular, and the hole 6 is provided inner than the outer peripheral surface 30. The cutter 20 has a member disposed inside the hole 6. The main body 10 is provided with a recess 2 in communication with the hole 6. When viewed from a radial direction, the main body 10 has a projection member 35 covering a part of the recess 2.

After extensive researches for a solution to improve the durability of cutters, the inventors of the present disclosure have achieved the following findings, and thereby established one aspect of the present disclosure. In order to improve the durability of the cutter, it is effective to use a large number of cutters so as to reduce the load of each cutter. In order to use a large number of cutters, it is required to improve the strength of the main body. After extensive studies, the inventors have conceived the idea of providing the cutters inner than the outer peripheral surface of the main body other than on the outer periphery of the main body. As a result, compared with the case where the outer periphery of the main body is cut off to form a pocket, the volume to be cut off the main body is smaller, which makes it possible to improve the strength of the main body.

When a location for disposing the cutter is provided inner than the outer peripheral surface of the main body, it is required to machine the main body in the axial direction instead of in the radial direction. Normally, the shape of a shank for holding a cutting edge is rectangular in plan view. However, in order to form a rectangular hole in the main body along the axial direction in plan view, it is required to perform, for example, electric discharge machining. Compared with machining by a combination of drill machining and subsequent reamer finishing, the electric discharge machining is lower in machining accuracy and longer in machining time, and thereby it is difficult to form a rectangular hole in plan view. Therefore, in the present disclosure, drill machining and subsequent reamer finishing, for example, are used to form a hole having a circular opening in the main body in plan view.

According to the cutting tool 100 according to one aspect of the present disclosure, the shape of the opening 19 of the hole 6 provided in the main body 10 is circular, and the hole 6 is provided inner than the outer peripheral surface 30, which makes it possible to improve the strength of the main body 10. As a result, a large number of cutters 20 can be attached to the main body 10, which makes it possible to improve the durability of each cutter 20.

With a cutting tool according to claim 2 it is possible to improve the durability of the cutting edge 21.

With a cutting tool according to claim 3, since the arc-shaped second side face 23 contacts the inner peripheral surface of the hole 6, it is possible to improve the positioning accuracy of the shank 22 in the radial direction, which contributes to the improvement of the cutting accuracy.

With a cutting tool according to claim 4 it is possible to suppress the rotation of the shank 22, which makes it possible to firmly fix the shank 22 to the main body 10.

With a cutting tool according to claim 5 it is possible to adjust the position of the cutter 20 in the above direction with high accuracy, which contributes to the improvement of the cutting accuracy.

With a cutting tool according to claim 6 it is possible to suppress the inclination of the shank 22 with respect to the above direction.

With a cutting tool according to claim 7 it is possible to suppress the vibration of the cutting edge 21 during machining.

With a cutting tool according to claim 8 it is possible to machine the inner peripheral surface of the valve seat with the cutter 20 while performing finish machining of a hole in the stem guide with the reamer, for example.

With a cutting tool according to claim 9 the resistance to each cutter 20 is reduced, which makes it possible to further improve the durability of the cutters 20.

With a cutting tool according to claim 10 it is possible to form an article having an inner peripheral surface whose angle changes along the above direction.

(With a cutting tool according to claim 11 it is possible to form an article having an inner peripheral surface with different angles.

With a cutting device 200 according to claim 12 it is possible to provide the cutting device 200 capable of improving the durability of the cutter 20.

### [Description of Embodiments]

Hereinafter, an embodiment of the present disclosure will be described in detail with reference to the drawings. It should be noted that in the following drawings, the same or corresponding parts are denoted by the same reference numerals, and the description thereof will not be repeated.

First, the structure of a cutting tool 100 according to the present embodiment will be described.

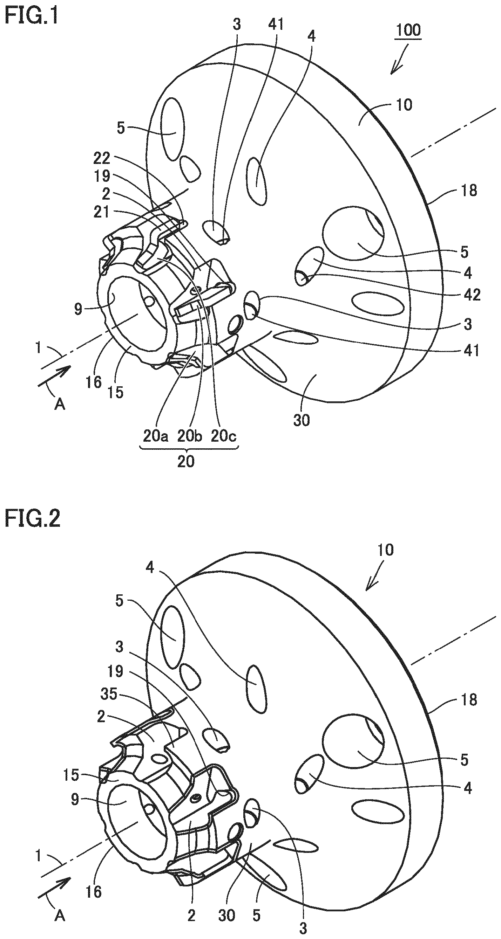

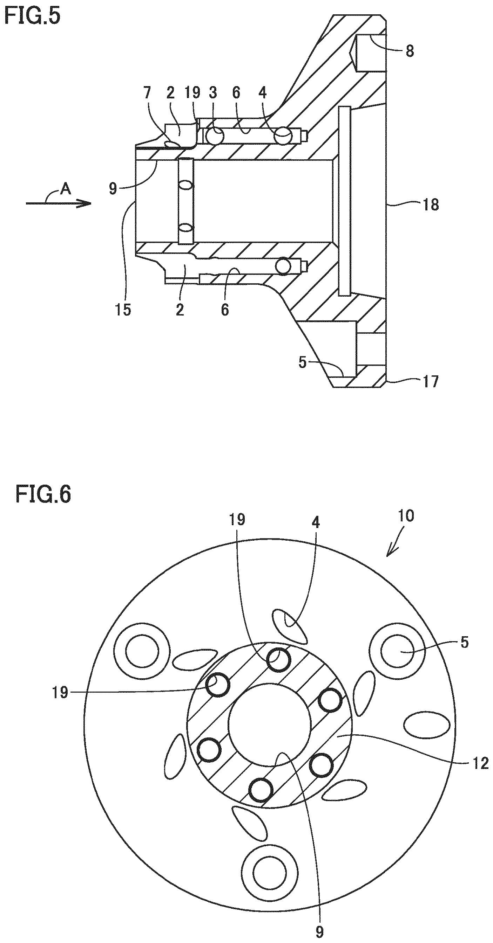

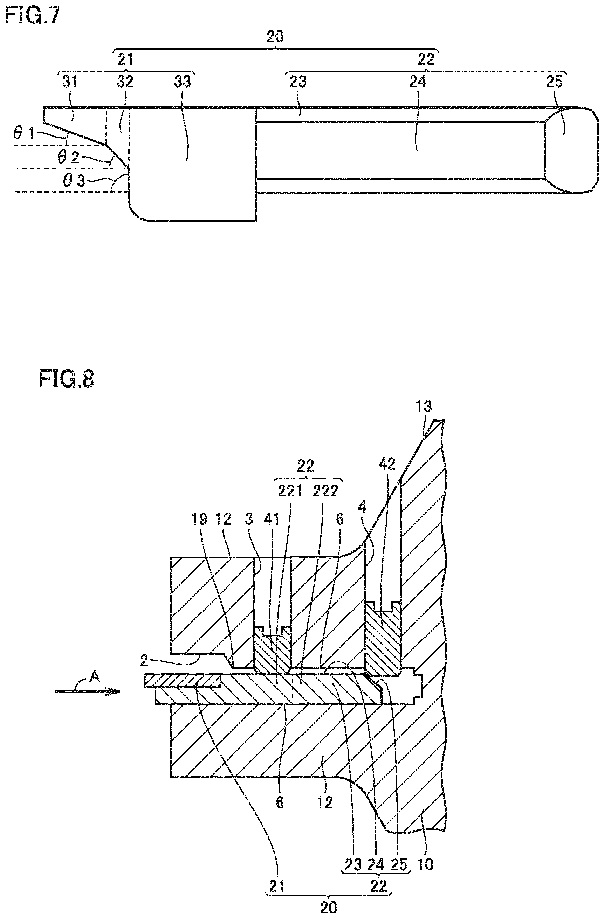

As illustrated in Fig. 1, the cutting tool 100 according to the present embodiment mainly includes a main body 10, a cutter 20, a fastening member 41, and a position adjusting member 42. The main body 10 has, for example, a hollow cylindrical shape. The main body 10 surrounds an axis line 1. A space formed by an inner peripheral surface 9 of the main body 10 extends along the axis line 1. The main body 10 is provided with a recess 2 and a hole 6 (see Fig. 5) in communication with the recess 2. The cutter 20 is disposed inside the hole 6 (see Fig. 8). The cutter 20 includes a cutting edge 21 and a shank 22 configured to hold the cutting edge 21. The shank 22 is disposed inside the hole 6. At least a part of the cutting edge 21 is positioned in the recess 2.

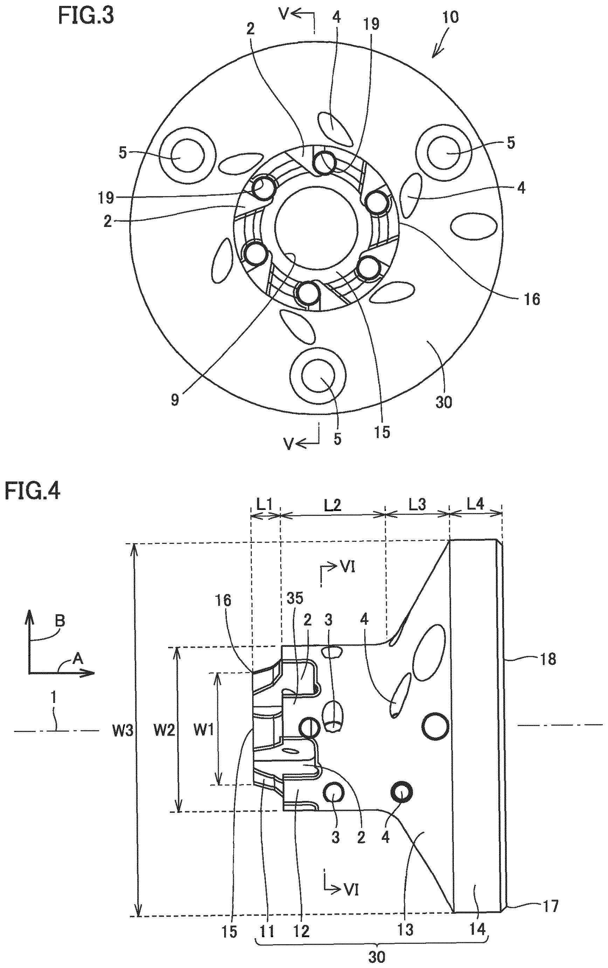

As illustrated in Fig. 2, the main body 10 has an outer peripheral surface 30. The outer peripheral surface 30 has one end 16 and the other end 17 (see Fig. 4). The hole 6 (see Fig. 5) extends in a first direction A from one region 15 surrounded by one end 16 to the other region 18 surrounded by the other end 17. The first direction A is, for example, a direction parallel to the axis line 1. Specifically, the hole 6 extends, for example, along the direction parallel to the axis line 1. As illustrated in Fig. 2, the recess 2 opens to the side of one end 16 and the outer peripheral surface 30. A plurality of recesses 2 are provided along the circumferential direction of the axis line 1. The number of the holes 6 and the recesses 2 is, for example, 6, but it is not particularly limited thereto. Preferably, the number of the holes 6 and the recesses 2 is 6 or more.

As illustrated in Fig. 3, when viewed from the first direction A, the shape of the opening 19 of the hole 6 is circular. Preferably, when viewed from the first direction A, the inner sectional shape of the hole 6 is also circular. When viewed from the first direction A, the hole 6 may be provided inner than one end 16 or may be provided inner than the other end 17. The hole 6 is provided inner than the outer peripheral surface 30. When viewed from the first direction A, the hole 6 is provided outer than the inner peripheral surface 9. The hole 6 is, for example, a blind hole.

As illustrated in Fig. 3, a plurality of holes 6 are provided in the main body 10 along the circumferential direction of the axis line 1. When viewed from the direction parallel to the axis line 1, the plurality of holes 6 are provided on the same circle centered on the axis line 1. In other words, when viewed from the direction parallel to the axis line 1, the distance from the center of each of the plurality of holes 6 to the axis line 1 is identical. The number of the holes 6 is for example 6, but it is not limited to 6. Preferably, the number of holes 6 is 6 or more. The number of the holes 6 is the same as the number of the recesses 2. The main body 10 is provided with a plurality of through holes 5. When viewed from the direction parallel to the axis line 1, the plurality of through holes 5 are provided on the same circle centered on the axis line 1. The through holes 5 extend in the direction parallel to the axis line 1. The number of the through holes 5 is, for example, 3, but it is not limited to 3.

As illustrated in Fig. 4, the main body 10 includes a first main body region 11, a second main body region 12, a third main body region 13, and a fourth main body region 14. The first main body region 11 has one end 16. The width W1 of the first main body region 11 may increase gradually in the first direction A. The second main body region 12 is provided contiguous to the first main body region 11. The width W2 of the first main body region 11 is constant in the first direction A. The recess 2 extends so as to cross the boundary between the first main body region 11 and the second main body region 12. Holes 3 are provided in the second main body region 12.

The third main body region 13 is provided contiguous to the second main body region 12. The width of the third main body region 13 increases monotonically in the first direction A. Holes 4 and through holes 5 are provided in the third main body region 13. The fourth main body region 14 is provided contiguous to the third main body region 13. The width W3 of the fourth main body region 14 is constant in the first direction A. As illustrated in Fig. 4, in a second direction B (that is, the radial direction B) perpendicular to the axis line 1, the width W3 of the fourth main body region 14 is larger than the width W2 of the second main body region 12. In the radial direction B, the width W1 of one region 15 surrounded by one end 16 is smaller than the width of the other region 18 surrounded by the other end 17.

As illustrated in Fig. 4, when viewed from the radial direction, the main body 10 has a projection member 35 that covers a part of the recess 2. The projection member 35 projects from the opening end of the concave portion 2 along the circumferential direction of the main body 10. As illustrated in Fig. 1, the cutting edge 21 may be in contact with the projection member 35 of the main body 10, which makes it possible to suppress the vibration of the cutting edge 21.

As illustrated in Fig. 5, the diameter of the hole 6 may be constant in the first direction A. The hole 3 may communicate with the hole 6. The hole 4 may communicate with the hole 6. A hole 7 may be provided in the recess 2. The hole 7 may penetrate the recess 2 and the inner peripheral surface 9. A hole 8 may be provided in the other region 18 surrounded by the other end 17. The hole 8 is configured to align the main body 10 with a connection member 50. As illustrated in Fig. 6, the cross-sectional shape of the hole 6 may be circular. Each of the plurality of holes 6 may be provided on the same cross section. The cross-sectional shape of the inner peripheral surface 9 may be circular.

As illustrated in Fig. 1, the cutter 20 may include a plurality of cutter members 20a, 20b and 20c separated from each other. The plurality of cutter members are provided, for example, on the outer peripheral surface 30 along the circumferential direction thereof. The number of cutter members is not particularly limited. The number of cutter members is preferably 6 or more, and more preferably 9 or more. When the number of cutter members is 6, the cutter 20 includes the first cutter member to the sixth cutter member. Each of the first to sixth cutter members has a corresponding cutting edge portion. Each of the first to sixth cutter members is arranged inside a corresponding hole 6. It is not necessary to arrange a cutter member in each of the holes 6. In other words, the number of cutter members may be smaller than the number of holes 6.

As illustrated in Fig. 7, the cutter 20 includes the cutting edge 21 and the shank 22. The shank 22 holds the cutting edge 21. The shank 22 has a first side face 24, a second side face 23, and a third side face 25. The first side face 24 and the third side face 25 are flat. The second side face 23 is curved. The second side face 23 is provided contiguous to the first side face 24. The third side face 25 is provided contiguous to the first side face 24. When viewed from the first direction A, the first side face 24 is linear. When viewed from the first direction A, the second side face 23 is arc-shaped. The third side face 25 is inclined with respect to the first side face 24.

As illustrated in Fig. 7, the cutting edge 21 has a first section 31 having a first angle θ1, a second section 32 having a second angle θ2, and a third section 33 having a third angle θ3. The second angle θ2 may be larger than the first angle θ1. The third angle θ3 may be larger than the second angle θ2. The first angle θ1 is, for example, 20°. The second angle θ2 is, for example, 45°. The third angle θ3 is, for example, 90°. The first section 31 is contiguous to the second section 32. The second section 32 is contiguous to the third section 33. The first section 31 and the third section 33 are joined together by the second section 32.

Fig. 8 illustrates a state in which the shank 22 is inserted into the hole 6. As illustrated in Fig. 8, the shank 22 is disposed in the hole 6. In other words, the shank 22 is completely disposed inside the hole 6. A part of the shank 22 may be exposed from the hole 6. The cutting edge 21 is exposed from the hole 6.

The fastening member 41 is configured to fix the shank 22 to the main body 10. As illustrated in Fig. 8, the fastening member 41 is disposed inside the hole 3 in communication with the hole 6. The fastening member 41 is, for example, a bolt. The fastening member 41 is configured to contact the planar first side face 24. When the fastening member 41 presses the first side face 24, the second side face 23 opposite to the first side face 24 is pressed against the main body 10. Thereby, the shank 22 is fixed to the main body 10. The first side face 24 may be separated from the main body 10.

The position adjusting member 42 is configured to adjust the position of the cutter 20 in the first direction A. As illustrated in Fig. 8, the position adjusting member 42 is provided in the hole 4 communicating with the hole 6. The position adjusting member 42 is, for example, a bolt. The third side face 25 included in the shank 22 is a flat surface inclined with respect to the first direction A, and is provided contiguous to the first side face 24. The third side face 25 is inclined, for example, by 45° with respect to the first side face 24. The position adjusting member 42 is configured to contact the third side face 25. In the first direction A, the hole 4 is provided between the hole 3 and the other end 17 (see Fig. 4).

By adjusting the height of the position adjusting member 42 in the direction along which the hole 4 extends (i.e., the vertical direction in Fig. 8), the position where the position adjusting member 42 contacts the third side face 25 is changed. Specifically, when the position adjusting member 42 is adjusted to move downward, the shank 22 is moved to the left side (the direction approaching one end). Conversely, when the position adjusting member 42 is adjusted to move upward, the shank 22 is moved to the right side (the direction approaching the other end). As illustrated in Fig. 8, the shank 22 may have a head portion 221 configured to hold the cutting edge 21, and a root portion 222 opposite to the head portion 221. When viewed from the first direction A, the root portion 222 may be completely surrounded by the main body 10.

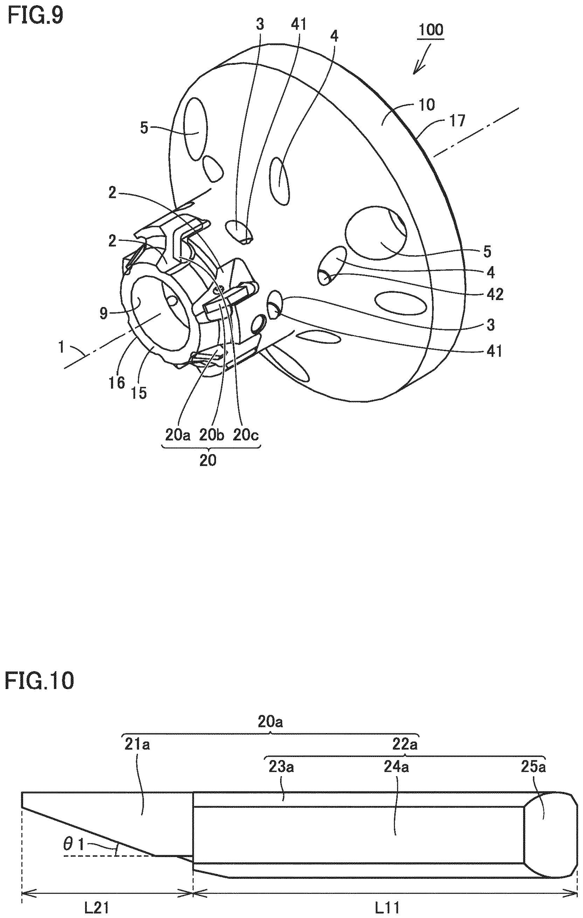

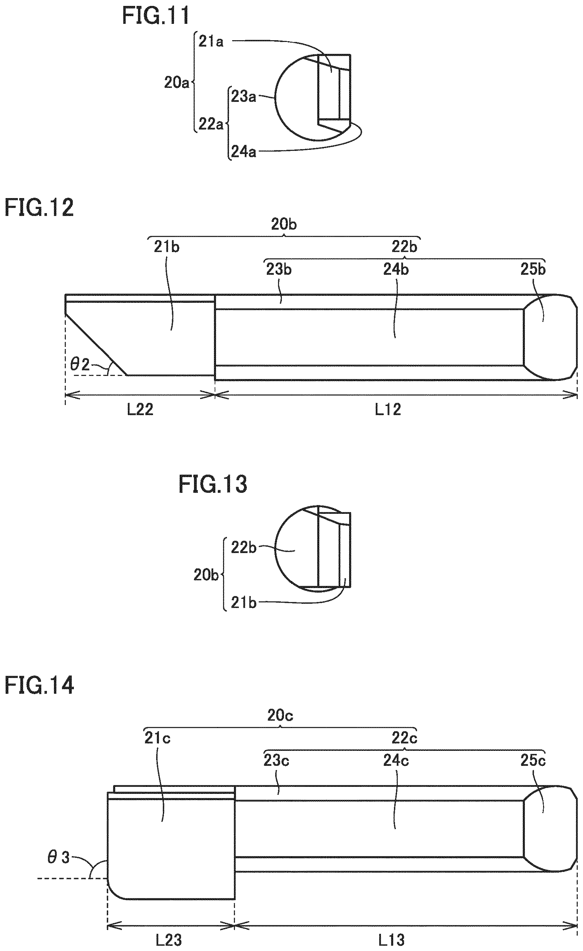

Each of the plurality of cutter members 20a, 20b and 20c may have a cutting edge portion having a different angle and a shank portion having a different length. Specifically, as illustrated in Fig. 9, the cutter 20 includes a first cutter member 20a, a second cutter member 20b, and a third cutter member 20c. As illustrated in Figs. 10 and 11, the first cutter member 20a may have a first cutting edge portion 21a having a first angle θ1 and a first shank portion 22a configured to hold the first cutting edge portion 21a. The first angle θ1 is, for example, 20°. The first shank portion 22a has a planar first side face 24a and a curved second side face 23a. The second side face 23a is provided contiguous to the first side face 24a. When viewed from the first direction A, the second side face 23a is arc-shaped.

As illustrated in Figs. 12 and 13, the second cutter member 20b may have a second cutting edge portion 21b having a second angle θ2 and a second shank portion 22b configured to the second cutting edge portion 21b. The second angle θ2 is larger than the first angle θ1. The second angle θ2 is, for example, 45°. The length L12 of the second shank portion 22b in the first direction A may be shorter than the length L11 of the first shank portion 22a. The length L22 of the second cutting edge portion 21b in the first direction A may be shorter than the length L21 of the first cutting edge portion 21a. The second shank portion 22b has a planar first side face 24b and a curved second side face 23b. The second side face 23b is provided contiguous to the first side face 24b. When viewed from the first direction A, the second side face 23b is arc-shaped.

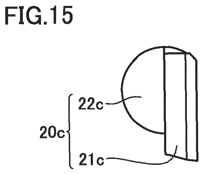

As illustrated in Figs. 14 and 15, the third cutter member 20c may have a third cutting edge portion 21c having a third angle θ3 and a third shank portion 22c configured to hold the third cutting edge portion 21c. The third angle θ3 is larger than the second angle θ2. The third angle θ3 is, for example, 90°. The length L13 of the third shank portion 22c in the first direction A may be shorter than the length L12 of the second shank portion 22b. The length L23 of the third cutting edge portion 21c may be shorter than the length L22 of the second cutting edge portion 21b. The third shank portion 22c has a planar first side face 24c and a curved second side face 23c. The second side face 23c is provided contiguous to the first side face 24c. When viewed from the first direction A, the second side face 23c is arc-shaped.

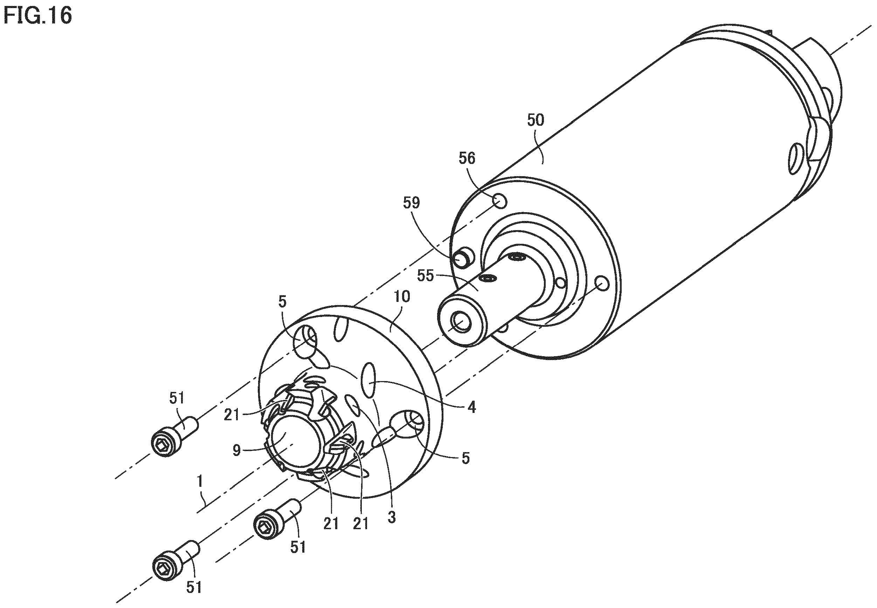

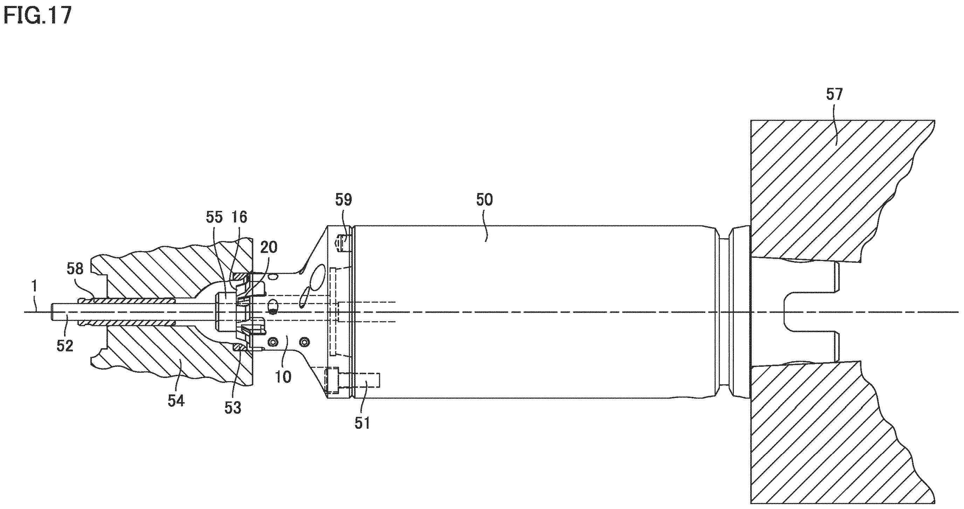

As illustrated in Fig. 16, the cutting tool 100 may further include a connection member 50, a reamer holding member 55, and a screw 51. The main body 10 is provided with a protrusion 59 for positioning. The protrusion 59 is engaged into the hole 8 provided in the main body 10. The main body 10 is fixed to the connection member 50 by using the screw 51. The screw 51 passes through the through hole 5 provided in the main body 10 and is fastened in a screw hole 56 provided in the connection member 50. Thereby, the main body 10 is fixed to the connection member 50. The reamer holding member 55 is configured to penetrate the space surrounded by the inner peripheral surface 9 of the main body 10. As described in the above, the main body 10 is configured to be detachable from the connection member 50. As illustrated in Fig. 17, a reamer 52 is provided on one end 16 side of the main body 10. The reamer 52 is held by the reamer holding member 55. The reamer 52 extends in the same direction as the axis line 1.

Hereinafter, the structure of the cutting device 200 according to the present embodiment will be described.

As illustrated in Fig. 17, the cutting device 200 mainly includes the cutting tool 100 described in the above and a driving unit 57. The cutting tool 100 mainly includes a main body 10, a cutter 20, a connection member 50, a reamer 52, and a reamer holding member 55. The main body 10 is configured to be rotatable around the axis line 1. The driving unit 57 is, for example, a main shaft of an equipment. As the driving unit 57 rotates, the connection member 50 and the main body 10 are driven to rotate. In other words, the rotational force is transmitted from the driving unit 57 to the connection member 50.

As the main body 10 rotates, the plurality of cutters 20 provided along the circumferential direction of the main body 10 are driven to rotate around the axis line 1. As a result, the inner peripheral surface of the valve seat 53 is machined by the cutting edge 21 of each cutter 20. Similarly, as the reamer 52 held by the reamer holding member 55 is driven to rotate, a hole is machined in the stem guide 58 provided in the cylinder head 54. Since the reamer 52 and the main body 10 are driven to rotate about the same axis line 1, the inner peripheral surface of the valve seat 53 and the hole of the stem guide 58 are machined simultaneously.

Hereinafter, the functions and effects of the cutting tool and the cutting device according to the present embodiment will be described.

According to the cutting tool 100 of the present embodiment, when viewed from the first direction A, the shape of the opening 19 of the hole 6 provided in the main body 10 is circular, and the hole 6 is provided inner than the outer peripheral surface 30, which makes it possible to improve the strength of the main body 10. As a result, a large number of cutters 20 can be attached to the main body 10, which makes it possible to improve the durability of each cutter 20.

According to the cutting tool 100 of the present embodiment, the cutter 20 includes the cutting edge 21 and the shank 22 configured to hold the cutting edge 21. The shank 22 is disposed inside the hole 6. The cutting edge 21 is exposed from the hole 6. Thereby, it is possible to improve the durability of the cutting edge 21.

Moreover, according to the cutting tool 100 of the present embodiment, when viewed from the first direction A, the shank 22 has a first side face 24 which is linear, and a second side face 23 which is arc-shaped and provided contiguous to the first face 24. Since the arc-shaped second side face 23 contacts the inner peripheral surface of the hole 6, it is possible to improve the positioning accuracy of the shank 22 in the radial direction, which contributes to the improvement of the cutting accuracy.

Moreover, according to the cutting tool 100 of the present embodiment, there is further provided a fastening member 41 configured to fix the shank 22 to the main body 10. The fastening member 41 is in contact with the first side face 24. As a result, it is possible to suppress the rotation of the shank 22, which makes it possible to firmly fix the shank 22 to the main body 10.

Moreover, according to the cutting tool 100 of the present embodiment, there is further provided a position adjusting member 42 configured to adjust the position of the cutter 20 in the first direction A. The shank 22 includes a third side face 25 which is a flat surface inclined with respect to the above direction and provided contiguous to the first side face 24. The position adjusting member 42 is in contact with the third side face 25. Thereby, it is possible to adjust the position of the cutter 20 in the above direction with high accuracy, which contributes to the improvement of the cutting accuracy.

Moreover, according to the cutting tool 100 of the present embodiment, the shank 22 has a head portion 221 configured to hold the cutting edge 21 and a root portion 222 opposite to the head portion 221. When viewed from the first direction A, the root portion 222 is completely surrounded by the main body 10. As a result, it is possible to suppress the inclination of the shank 22 with respect to the first direction A.

Moreover, according to the cutting tool 100 of the present embodiment, the cutting edge 21 contacts the main body 10, which makes it possible to suppress the vibration of the cutting edge 21 during machining.

Moreover, according to the cutting tool 100 of the present embodiment, there is further provided a reamer 52 on one end side. As a result, it is possible to machine the inner peripheral surface of the valve seat with the cutter 20 while performing finish machining of a hole in the stem guide with the reamer, for example.

Furthermore, according to the cutting tool 100 of the present embodiment, the cutter 20 includes six or more cutter members separated from each other. As a result, the resistance to each cutter 20 is reduced, , which makes it possible to further improve the durability of the cutters 20.

Moreover, according to the cutting tool 100 of the present embodiment, the cutter 20 includes a first cutter member 20a, a second cutter member 20b, and a third cutter member 20c. The first cutter member 20a includes a first cutting edge portion 21a having a first angle θ1, and a first shank portion 22a configured to hold the first cutting edge portion 21a. The second cutter member 20b includes a second cutting edge portion 21b having a second angleθ2 larger than the first angle θ1, and a second shank portion 22b which is configured to hold the second cutting edge portion 21b and is shorter than the first shank portion 22a. The third cutter member 20c includes a third cutting edge portion 21c having a third angle θ3 larger than the second angle θ2, and a third shank portion 22c which is configured to hold the third cutting edge portion 21c and is shorter than the second shank portion 22b. Thereby, it is possible to form an article having an inner peripheral surface whose angle changes along the first direction A.

Furthermore, according to the cutting tool 100 of the present embodiment, the cutter 20 includes a first cutter member 20a, a second cutter member 20b, and a third cutter member 20c. The first cutter member 20a, the second cutter member 20b and the third cutter member 20c each has a corresponding cutting edge portion 21a, 21b and 21c. Each cutting edge portion includes a first portion 31 having a first angle θ1, a second portion 32 having a second angle θ2 larger than the first angle θ1, and a third portion 33 having a third angle θ3 larger than the second angle θ2. Thereby, it is possible to form an article having an inner peripheral surface with different angles.

The cutting device 200 according to the present embodiment includes the cutting tool 100 and a driving unit 57 configured to rotate the cutting tool 100. Thereby, it is possible to provide the cutting device 200 capable of improving the durability of the cutter 20.

It should be understood that the embodiments disclosed herein have been presented for the purpose of illustration and description but not limited in all aspects. It is intended that the scope of the present disclosure is not limited to the description above but defined by the scope of the claims.

### REFERENCE SIGNS LIST

1: axis line; 2: recess; 3, 4, 6, 7, 8: hole; 5: through hole; 9: inner peripheral surface; 10: main body; 11: first main body region; 12: second main body region; 13: third main body region; 14: fourth main body region; 15: one region; 16: one end; 17: the other end; 18: the other region; 19: opening; 20: cutter; 20a: first cutter member; 20b: second cutter member; 20c: third cutter member; 21: cutting edge; 21a: first cutting edge portion; 21b: second cutting edge portion; 21c: third cutting edge portion; 22: shank; 22a: first shank portion; 22b: second shank portion; 22c: third shank portion; 23, 23a, 23b, 23c: second side face; 24, 24a, 24b, 24c: first side face; 25: third side face; 30: outer peripheral surface; 31: first section; 32: second section; 33: third section; 35: projection member; 41: fastening member, 42: position adjusting member; 50: connection member; 51: screw; 52: reamer; 53: valve seat; 54: cylinder head; 55: reamer holding member; 56: screw hole; 57: driving unit; 58: stem guide; 59: protrusion; 100: cutting tool; 200: cutting device; 221: head portion; 222: root portion; A: first direction; B: second direction (radial direction); L11, L12, L13, L21, L22, L23: length; W1, W2, W3: width.

## Claims

1. A cutting tool (100) comprising:
a main body (10) having an outer peripheral surface (30) with one end (16) and the other end (17); and
a cutter (20) fixed to the main body (10),
the main body (10) being provided with a hole (6) extending in a direction from a region (15) surrounded by the one end (16) toward a region (18) surrounded by the other end (17),
when viewed from the above direction, the shape of the opening (19) of the hole (6) is circular, the hole (6) being provided inner than the outer peripheral surface (30),
the cutter (20) having a member disposed inside the hole (6),
the main body (10) being provided with a recess (2) in communication with the hole (6),
**characterised in that**, when viewed from a radial direction,
the main body (10) having a projection member (35) covering a part of the recess (2).

2. The cutting tool (100) according to claim 1, wherein
the cutter (20) includes a cutting edge (21), and a shank (22) configured to hold the cutting edge (21),
the shank (22) is disposed inside the hole (6),
the cutting edge (21) is exposed from the hole (6).

3. The cutting tool (100) according to claim 2, wherein
when viewed from the above direction, the shank (22) includes a first side face (24) which is linear and a second side face (23) which is arc-shaped and provided contiguous to the first side face (24).

4. The cutting tool (100) according to claim 3, further comprising a fastening member (41) configured to fix the shank (22) to the main body (10), wherein
the fastening member (41) is in contact with the first side face (24).

5. The cutting tool (100) according to claim 3 or 4, further comprising a position adjusting member (42) configured to adjust the position of the cutter (20) in the above direction, wherein
the shank (22) includes a third side face (25) which is a flat surface inclined with respect to the above direction and provided contiguous to the first side face (24),
the position adjusting member (42) is in contact with the third side face (25).

6. The cutting tool (100) according to any one of claims 2 to 5, wherein
the shank (22) has a head portion (221) configured to hold the cutting edge (21) and a root portion (222) opposite to the head portion (221),
when viewed from the above direction, the root portion (222) is completely surrounded by the main body (10).

7. The cutting tool (100) according to any one of claims 2 to 6, wherein
the cutting edge (21) contacts the main body (10).

8. The cutting tool (100) according to any one of claims 1 to 7, further comprising a reamer (52) provided on the one end (16) side.

9. The cutting tool (100) according to any one of claims 1 to 8, wherein
the cutter (20) includes six or more cutter members separated from each other.

10. The cutting tool (100) according to any one of claims 1 to 9, wherein
the cutter (20) includes a first cutter member (20a), a second cutter member (20b) and a third cutter member (20c),
the first cutter member (20a) includes a first cutting edge portion (21a) having a first angle (θ1), and a first shank portion (22a) configured to hold the first cutting edge portion (21a),
the second cutter member (20b) includes a second cutting edge portion (21b) having a second angle (θ2) larger than the first angle (θ1), and a second shank portion (22b) which is configured to hold the second cutting edge portion (21b) and is shorter than the first shank portion (22a),
the third cutter member (20c) includes a third cutting edge portion (21c) having a third angle (θ3) larger than the second angle (θ2), and a third shank portion (22c) which is configured to hold the third cutting edge portion (21c) and is shorter than the second shank portion (22b).

11. The cutting tool (100) according to any one of claims 1 to 9, wherein
the cutter (20) includes a first cutter member (20a), a second cutter member (20b) and a third cutter member (20c),
each of the first cutter member (20a), the second cutter member (20b) and the third cutter member (20c) has a corresponding cutting edge portion (21a, 21b, 21c),
each cutting edge portion includes a first portion (31) having a first angle (θ1), a second portion (32) having a second angle (θ2) larger than the first angle (θ1), and a third portion (33) having a third angle (θ3) larger than the second angle (θ2).

12. A cutting device (200) comprising:
a cutting tool (100) according to any one of claims 1 to 11, and
a driving unit (57) configured to rotate the cutting tool (100).

## Patentansprüche

1. Schneidwerkzeug (100), umfassend:
einen Hauptkörper (10), der eine Außenumfangsfläche (30) mit einem Ende (16) und einem anderen Ende (17) aufweist, und
einen Schneider (20), der an dem Hauptkörper (10) fixiert ist,
wobei der Hauptkörper (10) mit einem Loch (6) versehen ist, das sich in einer Richtung von einem durch das eine Ende (16) umgebenen Bereich (15) zu einem durch das andere Ende (17) umgebenen Bereich (18) erstreckt,
wobei, von oben gesehen, die Form der Öffnung (19) des Lochs (6) kreisrund ist und das Loch (6) innerhalb der Außenumfangsfläche (30) vorgesehen ist,
wobei der Schneider (20) ein in dem Loch (6) angeordnetes Glied aufweist, und
wobei der Hauptkörper (10) mit einer Vertiefung (2), die mit dem Loch (6) verbunden ist, versehen ist,
**dadurch gekennzeichnet, dass**, aus einer radialen Richtung gesehen, der Hauptkörper (10) ein Vorsprungsglied (35), das einen Teil der Vertiefung (2) bedeckt, aufweist.

2. Schneidwerkzeug (100) nach Anspruch 1, wobei:
der Schneider (20) eine Schneidklinge (21) und einen zum Halten der Schneidklinge (21) konfigurierten Schaft (22) umfasst,
der Schaft (22) in dem Loch (6) angeordnet ist, und
die Schneidklinge (21) von dem Loch (6) freiliegt.

3. Schneidwerkzeug (100) nach Anspruch 2, wobei:
von oben gesehen, der Schaft (22) eine erste Seitenfläche (24), die linear ist, und eine zweite Seitenfläche (23), die bogenförmig ist und an die erste Seitenfläche (24) anschließend vorgesehen ist, umfasst.

4. Schneidwerkzeug (100) nach Anspruch 3, das weiterhin ein Befestigungsglied (41) umfasst, das konfiguriert ist zum Fixieren des Schafts (22) an dem Hauptkörper (10), wobei das Befestigungsglied (41) in Kontakt mit der ersten Seitenfläche (24) ist.

5. Schneidwerkzeug (100) nach Anspruch 3 oder 4, das weiterhin ein Positionseinstellungsglied (42) umfasst, das konfiguriert ist zum Einstellen der Position des Schneiders (20) in der vertikalen Richtung,
wobei der Schaft (22) eine dritte Seitenfläche (25) umfasst, die eine flache, in Bezug auf die vertikale Richtung geneigte Fläche ist und an die erste Seitenfläche (24) anschließend vorgesehen ist, und
wobei das Positionseinstellungsglied (42) in Kontakt mit der dritten Seitenfläche (25) ist.

6. Schneidwerkzeug (100) nach einem der Ansprüche 2 bis 5, wobei:
der Schaft (22) einen Kopfteil (221), der konfiguriert ist zum Halten der Schneidklinge (21), und einen Wurzelteil (222) gegenüber dem Kopfteil (221) aufweist, und
von oben gesehen, der Wurzelteil (222) vollständig durch den Hauptkörper (10) umgeben ist.

7. Schneidwerkzeug (100) nach einem der Ansprüche 2 bis 6, wobei die Schneidklinge (21) den Hauptkörper (10) kontaktiert.

8. Schneidwerkzeug (100) nach einem der Ansprüche 1 bis 7, das weiterhin einen Fräser (52), der auf der Seite des einen Endes (16) vorgesehen ist, umfasst.

9. Schneidwerkzeug (100) nach einem der Ansprüche 1 bis 8, wobei der Schneider (20) sechs oder mehr voneinander getrennte Schneidglieder umfasst.

10. Schneidwerkzeug (100) nach einem der Ansprüche 1 bis 9, wobei:
der Schneider (20) ein erstes Schneidglied (20a), ein zweites Schneidglied (20b) und ein drittes Schneidglied (20c) umfasst,
das erste Schneidglied (20a) einen ersten Schneidklingenteil (21a) mit einem ersten Winkel (Θ1) und einen ersten Schaftteil (22a), der konfiguriert ist zum Halten des ersten Schneidklingenteils (21a), umfasst,
das zweite Schneidglied (20b) einen zweiten Schneidklingenteil (21b) mit einem zweiten Winkel (Θ2), der größer als der erste Winkel (Θ1) ist, und einen zweiten Schaftteil (22b), der konfiguriert ist zum Halten des zweiten Schneidklingenteils (21b) und kürzer als der erste Schaftteil (22a) ist, umfasst, und
das dritte Schneidglied (20c) einen dritten Schneidklingenteil (21c) mit einem dritten Winkel (Θ3), der größer als der zweite Winkel (Θ2) ist, und einen dritten Schaftteil (22c), der konfiguriert ist zum Halten des dritten Schneidklingenteils (21c) und kürzer als der zweite Schaftteil (22b) ist, umfasst.

11. Schneidwerkzeug (100) nach einem der Ansprüche 1 bis 9, wobei:
der Schneider (20) ein erstes Schneidglied (20a), ein zweites Schneidglied (20b) und ein drittes Schneidglied (20c) umfasst,
das erste Schneidglied (20a), das zweite Schneidglied (20b) und das dritte Schneidglied (20c) jeweils einen entsprechenden Schneidklingenteil (21a, 21b, 21c) aufweisen, und
jeder Schneidklingenteil einen ersten Teil (31) mit einem ersten Winkel (Θ1), einen zweiten Teil (32) mit einem zweiten Winkel (Θ2), der größer als der erste Winkel (Θ1) ist, und einen dritten Teil (33) mit einem dritten Winkel (Θ3), der größer als der zweite Winkel (Θ2) ist, umfasst.

12. Schneidvorrichtung (200), umfassend:
ein Schneidwerkzeug (100) gemäß einem der Ansprüche 1 bis 11, und
eine Antriebseinheit (57), die konfiguriert ist zum Drehen des Schneidwerkzeugs (100).

## Revendications

1. Outil de coupe (100) comprenant :
un corps principal (10) présentant une surface périphérique extérieure (30) avec une extrémité (16) et l'autre extrémité (17) ; et
un élément de coupe (20) fixé au corps principal (10),
le corps principal (10) étant pourvu d'un trou (6) s'étendant dans une direction à partir d'une zone (15) entourée par la une extrémité (16) en direction d'une zone (18) entourée par l'autre extrémité (17),
lorsqu'elle est observée à partir de la direction du dessus, la forme de l'ouverture (19) du trou (6) est circulaire, le trou (6) étant prévu plus à l'intérieur que la surface périphérique extérieure (30),
l'élément de coupe (20) présentant un membre disposé à l'intérieur du trou (6),
le corps principal (10) étant pourvu d'un évidement (2) en communication avec le trou (6),
**caractérisé en ce que**, lorsqu'il est observé à partir d'une direction radiale,
le corps principal (10) présentant un membre de projection (35) recouvrant une partie de l'évidement (2).

2. Outil de coupe (100) selon la revendication 1, dans lequel
l'élément de coupe (20) comporte un bord de coupe (21), et une queue (22) configurée pour retenir le bord de coupe (21),
la queue (22) est disposée à l'intérieur du trou (6),
le bord de coupe (21) est exposé à partir du trou (6).

3. Outil de coupe (100) selon la revendication 2, dans lequel
lorsqu'il est observé à partir de la direction du dessus, la queue (22) comporte une première face latérale (24) qui est linéaire et une deuxième face latérale (23) qui est en forme d'arc et prévue de manière contigüe à la première face latérale (24).

4. Outil de coupe (100) selon la revendication 3, comprenant en outre un membre d'attache (41) configuré pour fixer la queue (22) au corps principal (10), dans lequel
le membre d'attache (41) est en contact avec la première face latérale (24).

5. Outil de coupe (100) selon la revendication 3 ou 4, comprenant en outre un membre de réglage de position (42) configuré pour régler la position de l'élément de coupe (20) dans la direction du dessus, dans lequel
la queue (22) comporte une troisième face latérale (25) qui est une surface plate inclinée par rapport à la direction du dessus et prévue de manière contigüe à la première face latérale (24),
le membre de réglage de position (42) est en contact avec la troisième face latérale (25).

6. Outil de coupe (100) selon l'une quelconque des revendications 2 à 5, dans lequel
la queue (22) présente une portion formant tête (221) configurée pour retenir le bord de coupe (21) et une portion formant racine (222) opposée à la portion formant tête (221),
lorsqu'elle est observée à partir de la direction du dessus, la portion formant racine (222) est complètement entourée par le corps principal (10).

7. Outil de coupe (100) selon l'une quelconque des revendications 2 à 6, dans lequel
le bord de coupe (21) est en contact avec le corps principal (10).

8. Outil de coupe (100) selon l'une quelconque des revendications 1 à 7, comprenant en outre un alésoir (52) prévu sur le côté de la une extrémité (16).

9. Outil de coupe (100) selon l'une quelconque des revendications 1 à 8, dans lequel
l'élément de coupe (20) comporte six membres d'élément de coupe ou plus séparés les uns des autres.

10. Outil de coupe (100) selon l'une quelconque des revendications 1 à 9, dans lequel
l'élément de coupe (20) comporte un premier membre d'élément de coupe (20a), un deuxième membre d'élément de coupe (20b) et un troisième membre d'élément de coupe (20c),
le premier membre d'élément de coupe (20a) comporte une première portion de bord de coupe (21a) présentant un premier angle (θ1), et une première portion de queue (22a) configurée pour retenir la première portion de bord de coupe (21a),
le deuxième membre d'élément de coupe (20b) comporte une deuxième portion de bord de coupe (21b) présentant un deuxième angle (θ2) plus grand que le premier angle (θ1), et une deuxième portion de queue (22b) qui est configurée pour retenir la deuxième portion de bord de coupe (21b) et est plus courte que la première portion de queue (22a),
le troisième membre d'élément de coupe (20c) comporte une troisième portion de bord de coupe (21c) présentant un troisième angle (θ3) plus grand que le deuxième angle (θ2), et une troisième portion de queue (22c) qui est configurée pour retenir la troisième portion de bord de coupe (21c) et est plus courte que la deuxième portion de queue (22b).

11. Outil de coupe (100) selon l'une quelconque des revendications 1 à 9, dans lequel
l'élément de coupe (20) comporte un premier membre d'élément de coupe (20a), un deuxième membre d'élément de coupe (20b) et un troisième membre d'élément de coupe (20c),
chacun du premier membre d'élément de coupe (20a), du deuxième membre d'élément de coupe (20b) et du troisième membre d'élément de coupe (20c) présente une portion de bord de coupe (21a, 21b, 21c) correspondante,
chaque portion de bord de coupe comporte une première portion (31) présentant un premier angle (θ1), une deuxième portion (32) présentant un deuxième angle (θ2) plus grand que le premier angle (θ1), et une troisième portion (33) présentant un troisième angle (θ3) plus grand que le deuxième angle (θ2).

12. Dispositif de coupe (200) comprenant :
un outil de coupe (100) selon l'une quelconque des revendications 1 à 11, et
une unité d'entraînement (57) configurée pour faire tourner l'outil de coupe (100).
